# EUROPEAN PATENT SPECIFICATION

(11) **EP 1 559 314 B1**
(45) Date of publication and mention of the grant of the patent: **14.02.2007**
(21) Application number: 04078420.9
(22) Date of filing: 17.12.2004
(51) Int. Cl.: A01J 7/02

(54) **A device for and a method of cleaning a milking installation**
Vorrichtung und Verfahren zur Reinigung einer Melkanlage
Dispositif et méthode de nettoyage d'une installation de traite

(30) Priority: 29.01.2004 NL 1025348; 04.02.2004 NL 1025395; 08.11.2004 NL 1027439
(43) Date of publication of application: 03.08.2005
(73) Proprietor: Lely Enterprises AG, 6300 ZUG (CH)
(72) Inventor: Fransen, Renatus Ignatius Joséphus, 3135 ZD Vlaardingen (NL)
(74) Representative: Corten, Maurice Jean F.M.

(56) References cited:
- EP-A- 0 653 153
- EP-A- 0 951 822
- EP-A- 1 046 336
- GB-A- 2 264 156
- NL-C- 1 016 817
- US-A1- 2003 183 174
- DATABASE WPI Section Ch, Week 198427 Derwent Publications Ltd., London, GB; Class D13, AN 1984-170106 XP002324542 -& SU 1 050 613 A (S RANCHES MEC ELEC) 30 October 1983 (1983-10-30)

## Description

The invention relates to a device for cleaning a milking installation according to the preamble of claim 1 see e.g. document NL-C-1 016 817.

The use of a device for cleaning a milking installation is often cumbersome for a farmer, because the farmer has to remove the old filter before the beginning of the cleaning and has to place a new filter after the cleaning and prior to the milking. Moreover, the farmer has to be present at the milking installation at most inconvenient times, sometimes in the middle of the night. Furthermore, the replacement of the milk filter requires some time, which is disadvantageous to a quick continuation of the milking process. In particular with automatic milking installations, in which a teat cup is automatically connected to a teat with the aid of a robot arm, this is extremely undesirable.

The preamble of claim 1 discloses a device for cleaning a milking installation, in which device the cleaning of the milking installation, in particular the replacement of the milk filter, can take place in a simple manner at convenient points of time.

For this purpose, a device for cleaning a milking installation of the above-described type comprises the features of the preamble of claim 1. This means that a milk filter or milk filter element needs not to be replaced before the milking can be continued. In particular if the valve element is automatically switchable, the switching times being in particular pre-adjustable, it is not necessary for a farmer to be present, and the replacement of the milk filter element can take place before the next cleaning at a point of time convenient to the farmer.

The device is preferably provided with a blowing device for blowing through the relevant milk filter element. It is further advantageous for the device to be provided with a main cleaning device, such as a heat cleaning device or a chemical cleaning device for cleaning with the aid of chemicals, for performing, during a main cleaning period, a main cleaning of the milk line and the relevant milk filter element, the cleaning period comprising the main cleaning period.

According to the invention, the control unit is designed in such a way that the operation of the valve element takes place after a minimum threshold part of the rinsing period inputted into a memory of the control unit has elapsed. According to the invention, the minimum threshold part amounts to approximately 50% of the rinsing period. In a preferred embodiment of a device according to the invention, the control unit is designed in such a way that the operation of the valve element takes place before a maximum threshold part of the main cleaning period inputted into the memory of the control unit has elapsed. The maximum threshold part preferably amounts to approximately 20% of the main cleaning period. This has the advantage that, after a cleaning, milking can be continued through a milk filter element without dirt particles, such as fibres, hairs or dung particles. Moreover, upon replacing the milk filter element, or a part thereof, there is no messing with milk, which promotes the hygiene of the milking installation. Additionally, the main cleaning, performed for example with hot water or steam, is performed through a clean filter, resulting in a better cleaning of the parts between a filter element and the milk tank.

The invention is in particular applicable to a milking installation with a milking robot for automatically connecting a teat cup to a teat of an animal.

The invention also relates to a method of cleaning according to claim 15.

The invention will be explained hereinafter in further detail with reference to an exemplary embodiment.
Figure 1 shows a part of the cleaning device during the discharge of milk through the first filter element,
Figure 2 shows a part of the cleaning device during the first part of the cleaning through the first filter element,
Figure 3 shows a part of the cleaning device during the second part of the cleaning through the second filter element, and
Figure 4 shows a part of the cleaning device during the discharge of milk through the second filter element.

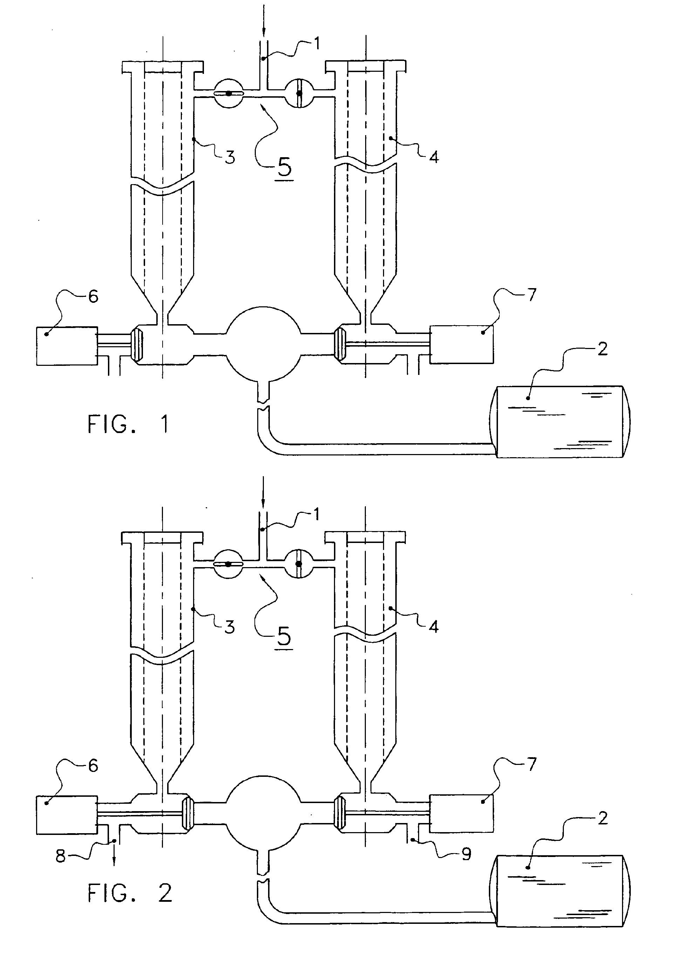

Figure 1 shows diagrammatically a part of a device for cleaning a milking installation for milking an animal, which part is relevant to the invention. The milking installation comprises a milk line 1 for discharging milk to a milk tank 2 or an other milk container. A milk filter is included in the milk line 1, which milk filter is designed as a first milk filter element 3 and a second milk filter element 4 arranged parallel to each other. By the expression "arranged parallel to each other" used in the present description is meant a parallel circuit generally known in fluid mechanics, without any undesired limitation with respect to the spatial configuration. The device is further provided with a non-shown blowing device, known per se, for blowing through the milk filter elements, with a non-shown rinsing water device, known per se, for rinsing, during a rinsing period, the milk line 1 and the relevant milk filter element 3, 4 with rinsing water, and with a main cleaning device, known per se, in the embodiment shown a heat cleaning device for performing, during a heat cleaning period (i.e. the main cleaning period), a heat cleaning of the milk line 1 and the relevant milk filter element 3, 4. The heat cleaning may be performed, for example, with hot water or with steam.

A valve element 5 is included in the milk line 1, which valve element 5 is preferably automatically switchable by a non-shown control unit. The valve element 5 may comprise, for example, a three-way valve, or two butterfly valves or an equivalent valve device. The valve element 5 is capable of being put into a first position for connecting the milk line 1 to the first milk filter element 3 and into a second position for connecting the milk line 1 to the second milk filter element 4. The control unit is suitable for operating during at least one cleaning, and preferably during each cleaning, the switchable valve element 5 for connecting the milk line 1 to the other milk filter element.

The operation of the valve element 5 by the control unit is such, in other words the switching times are such, that the switching takes place after a minimum threshold part of the rinsing period, inputted into a memory of the control unit, has elapsed, and before a maximum threshold part of the heat cleaning period, inputted into the memory of the control unit, has elapsed. It has been found in practice that a minimum threshold part of approximately 50% of the rinsing period and a maximum threshold part of approximately 20% of the heat cleaning period provide excellent results.

Each milk filter element 3, 4 is connectable to the milk tank 2 with the aid of a relevant rinsing valve 6, respectively 7, via a line. The rinsing valves 6, 7 are preferably automatically controllable by means of the control unit. In a favourable embodiment of a device according to the invention, the rinsing valves 6, 7 are connected to the connecting piece of the milk tank 2. In this manner it is possible to clean the rinsing valves simultaneously with the cleaning of the milk tank.

Figure 1 shows the situation in which the milk is discharged via the first milk filter element 3 to the milk tank 2. In this position, also the blowing out of the milk line 1 and the milk filter element 3 in the milk tank 2 takes place, so that the milk residues can be removed from the milk line 1 and the milk filter element 3.

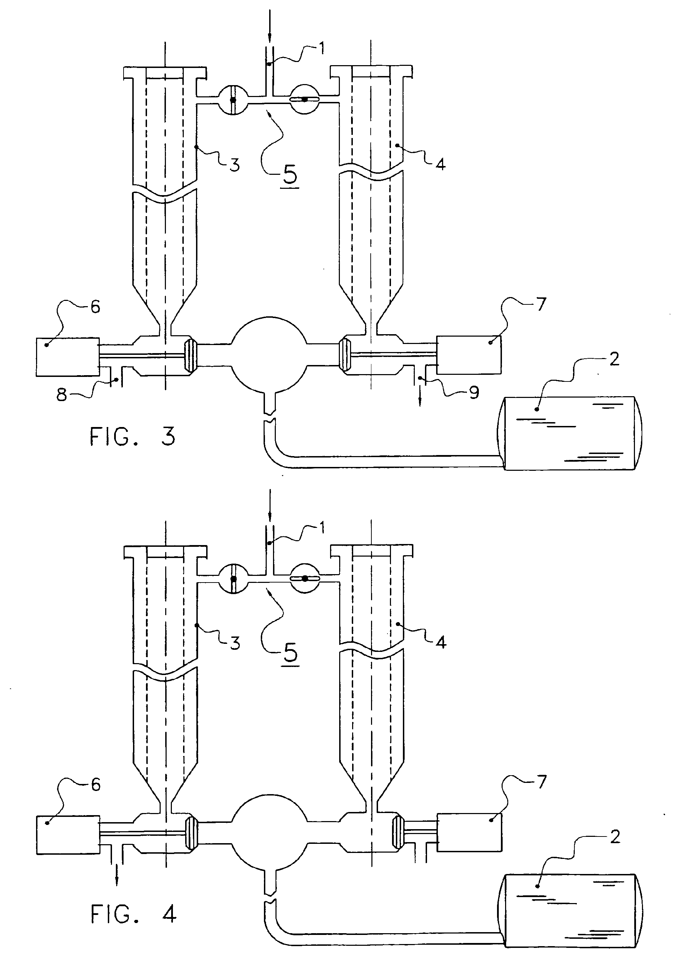

In Figure 2 the position of the rinsing valve 6 is such that rinsing water runs off via the discharge 8. This position is used during the first threshold part of the rinsing period and during the maximum threshold part of the heat cleaning period. Then the valve element 5 and the rinsing valves 6, 7 are put into such a position that at least a part of the heat cleaning takes place through a, previously disposed, clean milk filter element 4 (as shown in Figure 3). The fluid used for the heat cleaning is discharged via the discharge 9.

Figure 4 shows the situation in which milk is discharged via the second milk filter element 4 to the milk tank 2. Now the farmer is able to select, until the next cleaning, a favourable time for replacing the milk filter element 3, or a component thereof, such as a filter sock, by a clean filter. In an embodiment of a device according to the invention, this is possible in a simple manner owing to the fact that the filter body is tube-shaped and has an upper end that is adapted to be opened, so that the filter element disposed in the filter body can be removed in a simple manner by lifting it from the filter body. Furthermore, the inner side of the filter body can be cleaned in a simple manner owing to the fact that in an embodiment of a device according to the invention the filter body is disposed above the rinsing valve and the discharge is disposed in the immediate vicinity of the rinsing valve.

As shown in the drawing, each filter element may be designed as a cylindrical mesh element, the milk flowing from the outer side to the inner side of the mesh element for the purpose of filtration. In an alternative embodiment, each filter element may be designed, however, as one or more substantially disc-shaped mesh elements extending substantially transversely to the milk flow, so that the milk flows through the disc-shaped mesh elements. These disc-shaped mesh elements are preferably rotatable, so that the mesh elements are capable of being cleaned in counterflow. In some cases, both with cylindrical mesh elements and disc-shaped mesh elements, contaminating parts may still remain on the mesh element after the cleaning. These contaminated particles are preferably removed by making use of a scraper that is movable along the mesh element. Such a scraper may be integrated in the milk filter. In the case of a rotatable, disc-shaped mesh element, it is advantageous if the disc-shaped mesh element constitutes part of an arc segment and if the scraper is a rotatable scraper that moves by rotation along the surface of the mesh element. In this case the axis of rotation of the scraper preferably coincides with the axis of rotation of the mesh element. It is pointed out that, instead of mesh, also other elements provided with holes, such as, for example, perforated plates, may be used.

## Claims

1. A device for cleaning, during a cleaning period, a milking installation for milking an animal, which milking installation comprises a milk line (1) for discharging milk to a milk tank (2), a milk filter being included in said milk line, which device is provided with a rinsing water device for rinsing, during a rinsing period, the milk line and the milk filter with rinsing water, the cleaning period comprising the rinsing period, said milk filter comprising a first (3) and a second milk filter element (4) arranged parallel to each other, with a switchable valve element (5) included in the milk line, which valve element is capable of being put into a first position for connecting the milk line to the first milk filter element and into a second position for connecting the milk line to the second milk filter element, the device being provided with a control unit for operating the switchable valve element during at least one cleaning period for connecting the milk line to the other milk filter element, **characterized in that** the control unit is designed in such a way that the operation of the valve element (5) takes place after approximately 50% of the rinsing period inputted into a memory of the control unit has elapsed.

2. A device as claimed in claim 1, **characterized in that** the device is provided with a blowing device for blowing through the relevant milk filter element.

3. A device as claimed in claim 1 or 2, **characterized in that** the device is provided with a main cleaning device, such as a heat cleaning device or a chemical cleaning device for cleaning with the aid of chemicals, for performing, during a main cleaning period, a main cleaning of the milk line and the relevant milk filter element, the cleaning period comprising the main cleaning period.

4. A device as claimed in claim 3, **characterized in that** the control unit is designed in such a way that the operation of the valve element takes place before a maximum threshold part of the main cleaning period inputted into the memory of the control unit has elapsed.

5. A device as claimed in claim 4, **characterized in that** the maximum threshold part amounts to approximately 20% of the main cleaning period.

6. A device as claimed in any one of the preceding claims, **characterized in that** the milking installation comprises a milking robot for automatically connecting a teat cup to a teat of an animal.

7. A device as claimed in any one of the preceding claims, **characterized in that** the valve element is automatically switchable.

8. A device as claimed in any one of the preceding claims, **characterized in that** a filter element is designed as a cylindrical mesh element.

9. A device as claimed in any one of claims 1 to 7, **characterized in that** a filter element comprises one or more substantially disc-shaped mesh elements extending substantially transversely to the milk flow.

10. A device as claimed in claim 9, **characterized in that** a mesh element is rotatably disposed about an axis of rotation.

11. A device as claimed in claim 8, 9 or 10, **characterized in that** the device comprises a scraper that is movable along a mesh element.

12. A device as claimed in claim 11, **characterized in that** the scraper is integrated in the milk filter.

13. A device as claimed in claims 10 and 11, or in claims 10 and 13, **characterized in that** the disc-shaped mesh element constitutes part of an arc segment, and **in that** the scraper is a rotatable scraper that is movable by rotation about an axis of rotation along the surface of the mesh element.

14. A device as claimed in claim 13, **characterized in that** the axis of rotation of the scraper coincides with the axis of rotation of the mesh element.

15. A method of cleaning, during a cleaning period, a milking installation for milking an animal, which milking installation comprises a milk line (1) for discharging milk to a milk tank (2), a milk filter being included in said milk line, which method comprises successively the steps of:
discharging milk through the milk line for a first time,
performing a first cleaning of the milk line,
discharging milk through the milk line for a second time,
performing a second cleaning of the milk line,
a cleaning comprising the rinsing, during a rinsing period, of the milk line and the milk filter with rinsing water, the cleaning period comprising the rinsing period, said method further comprises the step of using as a milk filter a first (3) and a second milk filter element (4) arranged parallel to each other, of disposing in the milk line and using a switchable valve element (5) which valve element is capable of being put into a first position for connecting the milk line to the first milk filter element for the purpose of discharging milk for the first time, and into a second position for connecting the milk line to the second milk filter element for the purpose of discharging milk for the second time, the switchable valve element being operated during at least one cleaning period for connecting the milk line to the other milk filter element, **characterized in that** the operation of the valve element (5) takes place after approximately 50% of the rinsing period has elapsed.

16. A method as claimed in claim 15, **characterized in that** the cleaning comprises the step of blowing through the relevant milk filter element.

17. A method as claimed in claim 15 or 16, **characterized in that** the cleaning comprises the step of performing, during a main cleaning period, a main cleaning of the milk line and the relevant milk filter element, the cleaning period comprising the main cleaning period.

18. A method as claimed in claim 17, **characterized in that** the operation of the valve element takes place before a maximum threshold part of the main cleaning period has elapsed.

19. A method as claimed in claim 18, **characterized in that** as a maximum threshold part approximately 20% of the main cleaning period is chosen.

20. A method as claimed in any one of claims 15 to 19, **characterized in that,** after the operation of the valve element and before the subsequent cleaning, the filter element, or a part thereof, that is not connected to the milk line is replaced.

21. A method as claimed in any one of claims 15 to 20. **characterized in that** the milking of an animal comprises the step of automatically connecting a teat cup to a teat of the animal.

22. A method as claimed in any one of claims 15 to 21, **characterized in that** the operation of the valve element is performed automatically.

## Patentansprüche

1. Vorrichtung zum Reinigen einer Melkanlage zum Melken eines Tieres während einer Reinigungsperiode, wobei die Melkanlage eine Milchleitung (1) zum Ableiten von Milch in einen Milchtank (2) umfaßt, wobei in der Milchleitung ein Milchfilter angeordnet ist, wobei die Vorrichtung mit einer Spülwasservorrichtung versehen ist, um während einer Spülperiode die Milchleitung und den Milchfilter mit Spülwasser zu spülen, wobei die Reinigungsperiode die Spülperiode umfaßt, wobei der Milchfilter ein erstes Milchfilterelement (3) und ein zweites Milchfilterelement (4) umfaßt, die parallel zueinander angeordnet sind, wobei ein schaltbares Ventilelement (5) in der Milchleitung angeordnet ist, wobei das Ventilelement in eine erste Position zum Verbinden der Milchleitung mit dem ersten Milchfilterelement und in eine zweite Position zum Verbinden der Milchleitung mit dem zweiten Milchfilterelement einstellbar ist, wobei die Vorrichtung mit einer Steuereinheit versehen ist, um das schaltbare Ventilelement während mindestens einer Reinigungsperiode zu betätigen, um die Milchleitung mit dem anderen Milchfilterelement zu verbinden,
**dadurch gekennzeichnet, daß** die Steuereinheit derart ausgebildet ist, daß die Betätigung des Ventilelements (5) erfolgt, nachdem etwa 50 % der Spülperiode, die in einen Speicher der Steuereinheit eingegeben wurden, verstrichen sind.

2. Vorrichtung nach Anspruch 1,
**dadurch gekennzeichnet, daß** die Vorrichtung mit einer Blasvorrichtung zum Durchblasen des entsprechenden Milchfilterelements versehen ist.

3. Vorrichtung nach Anspruch 1 oder 2,
**dadurch gekennzeichnet, daß** die Vorrichtung mit einer Hauptreinigungsvorrichtung, wie z. B. einer Wärmereinigungsvorrichtung oder einer chemischen Reinigungsvorrichtung zum Reinigen mittels Chemikalien, versehen ist, um während einer Hauptreinigungsperiode eine Hauptreinigung der Milchleitung und des entsprechenden Milchfilterelements durchzuführen, wobei die Reinigungsperiode die Hauptreinigungsperiode umfaßt.

4. Vorrichtung nach Anspruch 3,
**dadurch gekennzeichnet, daß** die Steuereinheit derart ausgebildet ist, daß die Betätigung des Ventilelements erfolgt, bevor ein maximaler Grenzwertteil der Hauptreinigungsperiode, der in den Speicher der Steuereinheit eingegeben wurde, verstrichen ist.

5. Vorrichtung nach Anspruch 4,
**dadurch gekennzeichnet, daß** sich der maximale Grenzwertteil auf etwa 20 % der Hauptreinigungsperiode beläuft.

6. Vorrichtung nach einem der vorhergehenden Ansprüche,
**dadurch gekennzeichnet, daß** die Melkanlage einen Melkroboter zum automatischen Anschließen eines Zitzenbechers an eine Zitze eines Tieres umfaßt.

7. Vorrichtung nach einem der vorhergehenden Ansprüche,
**dadurch gekennzeichnet, daß** das Ventilelement automatisch schaltbar ist.

8. Vorrichtung nach einem der vorhergehenden Ansprüche,
**dadurch gekennzeichnet, daß** ein Filterelement als zylindrisches Gitterelement ausgeführt ist.

9. Vorrichtung nach einem der Ansprüche 1 bis 7,
**dadurch gekennzeichnet, daß** ein Filterelement ein oder mehrere im wesentlichen scheibenförmige Gitterelemente umfaßt, die im wesentlichen quer zum Milchfluß angeordnet sind.

10. Vorrichtung nach Anspruch 9,
**dadurch gekennzeichnet, daß** ein Gitterelement um eine Drehachse drehbar angeordnet ist.

11. Vorrichtung nach Anspruch 8, 9 oder 10,
**dadurch gekennzeichnet, daß** die Vorrichtung einen Abstreifer umfaßt, der über ein Gitterelement bewegbar ist.

12. Vorrichtung nach Anspruch 11,
**dadurch gekennzeichnet, daß** der Abstreifer in den Milchfilter integriert ist.

13. Vorrichtung nach den Ansprüchen 10 und 11 oder den Ansprüchen 10 und 12,
**dadurch gekennzeichnet, daß** das scheibenförmige Gitterelement Teil eines Bogensegments ist, und daß der Abstreifer ein drehbarer Abstreifer ist, der durch Drehung um eine Drehachse über die Oberfläche des Gitterelements bewegbar ist.

14. Vorrichtung nach Anspruch 13,
**dadurch gekennzeichnet, daß** die Drehachse des Abstreifers mit der Drehachse des Gitterelements zusammenfällt.

15. Verfahren zum Reinigen einer Melkanlage zum Melken eines Tieres während einer Reinigungsperiode, wobei die Melkanlage eine Milchleitung (1) zum Ableiten von Milch in einen Milchtank (2) umfaßt, wobei in der Milchleitung ein Milchfilter angeordnet ist, wobei das Verfahren folgende aufeinanderfolgende Verfahrensschritte umfaßt:
Ableiten von Milch durch die Milchleitung zum ersten Mal,
Durchführen einer ersten Reinigung der Milchleitung,
Ableiten von Milch durch die Milchleitung zum zweiten Mal,
Durchführen einer zweiten Reinigung der Milchleitung,
wobei eine Reinigung das Spülen der Milchleitung und des Milchfilters mit Spülwasser während einer Spülperiode umfaßt, wobei die Reinigungsperiode die Spülperiode umfaßt,
wobei das Verfahren ferner den Verfahrensschritt des Verwendens eines ersten Milchfilterelements (3) und eines zweiten Milchfilterelements (4), die parallel zueinander angeordnet sind, als Milchfilter sowie des Anordnens in der Milchleitung und des Verwendens eines schaltbaren Ventilelements (5) umfaßt, wobei das Ventilelement einstellbar ist in eine erste Position zum Verbinden der Milchleitung mit dem ersten Milchfilterelement, um Milch zum ersten Mal abzuleiten, und in eine zweite Position zum Verbinden der Milchleitung mit dem zweiten Milchfilterelement, um Milch zum zweiten Mal abzuleiten, wobei das schaltbare Ventilelement während mindestens einer Reinigungsperiode betätigt wird, um die Milchleitung mit dem anderen Milchfilterelement zu verbinden,
**dadurch gekennzeichnet, daß** die Betätigung des Ventilelements (5) erfolgt, nachdem etwa 50 % der Spülperiode verstrichen sind.

16. Verfahren nach Anspruch 15,
**dadurch gekennzeichnet, daß** die Reinigung den Verfahrensschritt des Durchblasens des entsprechenden Milchfilterelements umfaßt.

17. Verfahren nach Anspruch 15 oder 16,
**dadurch gekennzeichnet, daß** die Reinigung den Verfahrensschritt des Durchführens einer Hauptreinigung der Milchleitung und des entsprechenden Milchfilterelements während einer Hauptreinigungsperiode umfaßt, wobei die Reinigungsperiode die Hauptreinigungsperiode umfaßt.

18. Verfahren nach Anspruch 17,
**dadurch gekennzeichnet, daß** die Betätigung des Ventilelements erfolgt, bevor ein maximaler Grenzwertteil der Hauptreinigungsperiode verstrichen ist.

19. Verfahren nach Anspruch 18,
**dadurch gekennzeichnet, daß** als maximaler Grenzwertteil etwa 20 % der Hauptreinigungsperiode gewählt werden.

20. Verfahren nach einem der Ansprüche 15 bis 19,
**dadurch gekennzeichnet, daß** nach der Betätigung des Ventilelements und vor der anschließenden Reinigung das nicht mit der Milchleitung verbundene Filterelement oder ein Teil desselben ausgetauscht wird.

21. Verfahren nach einem der Ansprüche 15 bis 20,
**dadurch gekennzeichnet, daß** das Melken eines Tieres den Verfahrensschritt des automatischen Anschließens eines Zitzenbechers an eine Zitze des Tieres umfaßt.

22. Verfahren nach einem der Ansprüche 15 bis 21,
**dadurch gekennzeichnet, daß** die Betätigung des Ventilelements automatisch durchgeführt wird.

## Revendications

1. Dispositif pour nettoyer, au cours d'une phase de nettoyage, une;installation de traite pour traire un animal, laquelle installation de traite comprend une canalisation à lait (1) pour l'évacuation du lait vers une cuve de lait (2), un filtre à lait étant compris dans ladite canalisation à lait, lequel dispositif est pourvu d'un dispositif de rinçage à l'eau pour rincer, au cours d'une phase de rinçage, la canalisation à lait et le filtre à lait avec une eau de rinçage, la phase de nettoyage comprenant la phase de rinçage, ledit filtre à lait comprenant une première (3) et une seconde pièces de filtre à lait (4) agencées parallèlement l'une à l'autre, avec un élément de valve commutable (5) compris dans la canalisation à lait, lequel élément de valve est capable d'être mis dans une première position pour raccorder la canalisation à lait à la première pièce du filtre à lait et dans une seconde position pour raccorder la canalisation à lait à la seconde pièce du filtre à lait, le dispositif étant pourvu d'une unité de commande pour faire fonctionner l'élément de valve commutable pendant au moins une phase de nettoyage pour raccorder la canalisation à lait à l'autre pièce du filtre à lait,
**caractérisé en ce que** l'unité de commande est conçue de telle manière que le fonctionnement de l'élément de valve (5) a lieu après qu'environ 50 % de la phase de rinçage entrée dans une mémoire de l'unité de commande se sont écoulés.

2. Dispositif selon la revendication 1,
**caractérisé en ce que** le dispositif est pourvu d'un dispositif de soufflage pour souffler dans la pièce du filtre à lait appropriée.

3. Dispositif selon la revendication 1 ou 2,
**caractérisé en ce que** le dispositif est pourvu d'un dispositif de nettoyage principal, tel qu'un dispositif de nettoyage thermique ou un dispositif de nettoyage chimique pour un nettoyage à l'aide de produits chimiques, pour effectuer, durant une phase de nettoyage principal, un nettoyage principal de la canalisation à lait et des pièces du filtre à lait appropriées, la phase de nettoyage comprenant la phase de nettoyage principal.

4. Dispositif selon la revendication 3,
**caractérisé en ce que** l'unité de commande est conçue de telle manière que le fonctionnement de l'élément de valve a lieu avant qu'une partie de seuil maximal de la phase de nettoyage principal entrée dans la mémoire de l'unité de commande ne se soit écoulée.

5. Dispositif selon la revendication 4,
**caractérisé en ce que** la partie de seuil maximal s'élève à environ 20 % de la phase de nettoyage principal.

6. Dispositif selon l'une quelconque des revendications précédentes, **caractérisé en ce que** l'installation de traite comprend un robot de traite pour raccorder automatiquement un gobelet-trayeur au trayon d'un animal.

7. Dispositif selon l'une quelconque des revendications précédentes, **caractérisé en ce que** l'élément de valve est commutable automatiquement.

8. Dispositif selon l'une quelconque des revendications précédentes, **caractérisé en ce qu'**une pièce de filtre est conçue comme un élément de maille cylindrique.

9. Dispositif selon l'une quelconque des revendications 1 à 7, **caractérisé en ce qu'**une pièce de filtre comprend un ou plusieurs éléments de maille essentiellement en forme de disque s'étendant essentiellement de manière transversale par rapport au flux de lait.

10. Dispositif selon la revendication 9, **caractérisé en ce qu'**un élément de maille est disposé de façon pivotante autour d'un axe de rotation.

11. Dispositif selon la revendication 8, 9 ou 10, **caractérisé en ce que** le dispositif comprend un racloir qui est mobile le long de l'élément de maille.

12. Dispositif selon la revendication 11, **caractérisé en ce que** le racloir est intégré dans le filtre à lait.

13. Dispositif selon les revendications 10 et 11 ou les revendications 10 et 13, **caractérisé en ce que** l'élément de maille en forme de disque fait partie d'un segment d'arc et **en ce que** le racloir est un racloir pivotant qui est mobile par rotation autour d'un axe de rotation le long de la surface de l'élément de maille.

14. Dispositif selon la revendication 13, **caractérisé en ce que** l'axe de rotation du racloir coïncide avec l'axe de rotation de l'élément de maille.

15. Méthode pour nettoyer, au cours d'une phase de nettoyage, une installation de traite pour traire un animal, laquelle installation de traite comprend une canalisation à lait (1) pour l'évacuation du lait vers une cuve de lait (2), un filtre à lait étant compris dans ladite canalisation à lait, laquelle méthode comprend les étapes successives consistant à :
évacuer le lait par la canalisation à lait une première fois,
effectuer un premier nettoyage de la canalisation à lait,
évacuer le lait par la canalisation à lait une seconde fois,
effectuer un second nettoyage de la canalisation à lait,
un nettoyage comprenant le rinçage, au cours d'une phase de rinçage, de la canalisation à lait et du filtre à lait avec de l'eau de rinçage, la phase de nettoyage comprenant la phase de rinçage,
ladite méthode comprenant en outre les étapes consistant à utiliser comme filtre à lait une première (3) et une seconde pièces de filtre (4) agencées parallèlement l'une à l'autre, disposer dans la canalisation à lait et utiliser un élément de valve commutable (5), lequel élément de valve est capable d'être mis dans une première position pour raccorder la canalisation à lait à la première pièce du filtre à lait dans le but d'évacuer le lait la première fois, et dans une seconde position pour raccorder la canalisation à lait à la seconde pièce du filtre à lait dans le but d'évacuer le lait la seconde fois, l'élément de valve commutable étant en fonctionnement pendant au moins une phase de nettoyage pour raccorder la canalisation à lait à l'autre pièce du filtre à lait,
**caractérisée en ce que** le fonctionnement de l'élément de valve (5) a lieu après qu'environ 50 % de la phase de rinçage se sont écoulés.

16. Méthode selon la revendication 15, **caractérisée en ce que** le nettoyage comprend l'étape consistant à souffler à travers la pièce du filtre à lait appropriée.

17. Méthode selon la revendication 15 ou 16, **caractérisée en ce que** le nettoyage comprend l'étape consistant à effectuer, au cours d'une phase de nettoyage principal, un nettoyage principal de la canalisation à lait et de la pièce du filtre à lait appropriée, la phase de nettoyage comprenant la phase de nettoyage principal.

18. Méthode selon la revendication 17, **caractérisée en ce que** le fonctionnement de l'élément de valve a lieu avant qu'une partie de seuil maximal de la phase de nettoyage principal ne se soit écoulée.

19. Méthode selon la revendication 18, **caractérisée en ce qu'**une valeur d'environ 20 % est choisie comme partie de seuil maximal de la phase de nettoyage principal.

20. Méthode selon l'une quelconque des revendications 15 à 19, **caractérisée en ce que**, après le fonctionnement de l'élément de valve et avant le nettoyage consécutif, la pièce du filtre ou une partie de celle-ci, qui n'est pas connectée à la canalisation à lait est remplacée.

21. Méthode selon l'une quelconque des revendications 15 à 20, **caractérisée en ce que** la traite d'un animal comprend l'étape consistant à raccorder automatiquement un gobelet trayeur au trayon de l'animal.

22. Méthode selon l'une quelconque des revendications 15 à 21, **caractérisée en ce que** le fonctionnement de l'élément de valve est exécuté automatiquement.
